# EUROPÄISCHE PATENTSCHRIFT

(11) **EP 3 798 754 B1**
(45) Veröffentlichungstag und Bekanntmachung des Hinweises auf die Patenterteilung: **23.07.2025**
(21) Anmeldenummer: 19200114.7
(22) Anmeldetag: 27.09.2019
(51) Int. Cl.: G05B 19/042, G05B 19/418, H04W 12/08

(54) **VERFAHREN ZUM AUTOMATISCHEN ANMELDEN EINES BENUTZERS AN EINEM FELDGERÄT UND AUTOMATIONSSYSTEM**
METHOD FOR AUTOMATICALLY LOGGING IN A USER TO A FIELD DEVICE AND AN AUTOMATION SYSTEM
PROCÉDÉ D'ENREGISTREMENT AUTOMATIQUE D'UN UTILISATEUR SUR UN APPAREIL DE TERRAIN ET SYSTÈME D'AUTOMATISATION

(43) Veröffentlichungstag der Anmeldung: 31.03.2021
(73) Patentinhaber: Siemens Schweiz AG, 8047 Zürich (CH)
(72) Erfinder: KRÖSELBERG, Dirk, 81541 München (DE); DENIS, Carl Henrik, 80801 München (DE); RIENER, Silvio, 80807 München (DE)
(74) Vertreter: Siemens Patent Attorneys

(56) Entgegenhaltungen:
- WO-A1-2018/064765
- US-A1- 2013 086 646
- US-A1- 2015 215 321

## Beschreibung

Die vorliegende Erfindung betrifft ein Verfahren zum automatischen Anmelden eines Benutzers an einem Feldgerät und ein Automationssystem.

Zum Verwalten eines Feldgeräts durch einen Benutzer ist es üblicherweise nötig, dass der Benutzer sich bei dem Feldgerät mit einer Kombination aus Benutzername und Passwort anmeldet. Das Feldgerät kann beispielsweise über unterschiedliche Benutzerkonten verfügen, wobei in Abhängigkeit des Benutzerkontos verschiedene Verwaltungsoperationen durchführbar sind. Insbesondere bei industriellen Anlagen, wie Automationssystemen, die von Service-Technikern des Herstellers regelmäßig gewartet werden müssen, besteht hierbei das Problem, dass die verwendeten Zugangsdaten häufig sehr einfach sind, um Komplikationen bei dem Anmeldeprozess zu vermeiden. Das Verwenden von einmaligen und komplexen Passwörtern für unterschiedliche Feldgeräte würde die Sicherheit erhöhen, ist aber in der Praxis nur schwer umsetzbar. Eine manuelle Eingabe von langen und komplexen Passwörtern ist beispielsweise zeitaufwändig und fehleranfällig.

Als weiteres Problem stellt sich die Frage, wie die verwendeten Zugangsdaten gespeichert und bereitgestellt werden können. Je nach Anforderung durch den Betreiber eines Feldgeräts oder Automationssystems sind hierbei zentrale, dezentrale oder auch lokale Systeme möglich. Insbesondere bei älteren Feldgeräten ist es häufig nicht oder nicht einfach möglich, Passwortänderungen vorzunehmen oder diese in ein entsprechendes automatisiertes Zugangssystem zu integrieren.

Ein Dokument US 2015/0215321A1 offenbart eine Methode und ein System zum Autorisieren eines Nutzers an einem Feldgerät durch ein mobiles Kommunikationsgerät.

Vor diesem Hintergrund besteht eine Aufgabe der vorliegenden Erfindung darin, ein verbessertes Verfahren zum automatischen Anmelden eines Benutzers an einem Feldgerät vorzuschlagen.

Gemäß einem ersten Aspekt wird ein Verfahren zum automatischen Anmelden eines Benutzers an einem Feldgerät zum Verwalten des Feldgeräts vorgeschlagen. In einem Schritt a) wird eine Benutzerinformation in Abhängigkeit einer Identität des Benutzers und einer Identität des Feldgeräts durch eine Sicherheitseinrichtung bereitgestellt. In einem Schritt b) wird die bereitgestellte Benutzerinformation an ein Mobilgerät des Benutzers übertragen. In einem Schritt c) erzeugt das Mobilgerät eine Feldgerät-spezifische Anmeldeinformation in Abhängigkeit der übertragenen Benutzerinformation. In einem Schritt d) wird der Benutzer an dem Feldgerät mittels der erzeugten Anmeldeinformation angemeldet.

Dieses Verfahren weist insbesondere den Vorteil auf, dass eine hochsichere Infrastruktur zum Verwalten von Zugangsinformationen zum Verwalten der Feldgeräte verwendet werden kann, ohne dass es bei dem Anmeldevorgang zu Problemen kommt. Insbesondere kommt es bei einer manuellen Eingabe von komplexen und langen Passwörtern häufig zu Eingabefehlern, was vorliegend vermieden wird, da eine nahtlose Kette von der Sicherheitseinrichtung bis zu der Anmeldung an dem Feldgerät bereitgestellt wird.

Unter einem Feldgerät wird vorliegend insbesondere jedes "smarte" Gerät verstanden, das beispielsweise über eine Sensorik und/oder eine Datenverarbeitung verfügt. Solche Feldgeräte können insbesondere konfiguriert werden, um ihr Verhalten und/oder ihre Funktionen an den jeweils gewünschten Einsatzzweck anzupassen. Das Feldgerät weist hierzu eine Eingabemöglichkeit auf, die insbesondere geschützt ist, beispielsweise durch ein Passwort. Um das Feldgerät zu verwalten, muss daher beispielsweise zunächst das Passwort eingegeben werden. Insbesondere weist das Feldgerät eine Steuersoftware, wie ein Betriebssystem, auf, mittels welchem das Feldgerät verwaltbar ist.

Beispiele für Feldgeräte sind Smart-Home-Geräte, wie intelligente Lichtschalter, Türschlösser, Lüftungs- und/oder Heizungsanlagen und dergleichen, aber auch Geldautomaten, Ticketautomaten, medizintechnische Geräte, wie Röntgengeräte oder Computertomographen, und auch industrielle Produktionsanalgen. Insbesondere kann eine Mehrzahl von Feldgeräten ein Automatisierungssystem bilden. Feldgeräte, die ein Automatisierungssystem bilden können dabei insbesondere gemeinsam von einem Steuerrechner aus verwaltet werden.

Unter dem Verwalten eines Feldgeräts wird vorzugsweise jede Operation an dem Feldgerät verstanden, die eine Konfiguration oder Einstellung an dem Feldgerät verändert. Unter Verwalten werden insbesondere Service-Operationen, wie ein Aktualisieren einer Software oder Firmware, oder sonstige Funktionstest verstanden. Ein Normalbetrieb des Feldgeräts ist daher insbesondere kein Verwalten des Feldgeräts. Das Setzen von Einstellungen eines Röntgengeräts und das Starten einer Röntgenaufnahme durch einen Bediener, wie beispielsweise einen Arzt, ist vorzugsweise kein Verwalten des Feldgeräts.

Je nach Art und Konfiguration des Feldgeräts kann ein zentraler Verwaltungs-Zugang, wie beispielsweise ein Administrator-Zugang, vorgesehen sein, oder es können unterschiedliche Benutzergruppen vorgesehen sein, wobei ein jeweilige Benutzergruppe zugeordnete Rechte hat. Es kann auch für jeden Benutzer ein individuelles Benutzerkonto vorgesehen sein, wobei jedem Benutzerkonto individuelle Rechte zum Verwalten des Feldgeräts zugeordnet sind.

Diese Feldgeräte sind insbesondere nicht mit dem Internet verbunden oder weisen zumindest keinen aus dem Internet zugänglichen Zugang auf, der das Verwalten des Feldgeräts ermöglicht. Dies ist beispielsweise bei sicherheitskritischen Feldgeräten häufig der Fall. Auf diese Weise kann beispielsweise sichergestellt werden, dass ein Hacker über das Internet keinen Verwaltungszugriff auf das Feldgerät erhalten kann. Eine Anmeldung an dem Feldgerät zum Verwalten des Feldgeräts, beispielsweise durch einen Service-Techniker, kann bei solchen Feldgeräten nur lokal erfolgen, das heißt der Service-Techniker benötigt einen physischen Zugriff auf das Feldgerät.

Die Sicherheitseinrichtung ist beispielsweise als ein Passwort-Safe ausgebildet. Die Sicherheitseinrichtung kann beispielsweise über das Internet oder auch ein internes Intranet zugreifbar sein. Vorzugsweise ist die Sicherheitseinrichtung zum kryptographischen Speichern von Benutzerinformationen für eines oder mehrere Feldgeräte eingerichtet. Eine Benutzerinformation kann dabei eine für jeden individuellen Benutzer und für jedes Feldgerät gesonderte Information sein. Es kann aber auch vorgesehen sein, dass mehrere Benutzer eine Benutzergruppe bilden, deren Benutzerinformation dann identisch ist. Vorzugsweise ist die Benutzerinformation zumindest für jedes Feldgerät einer Anzahl von Feldgeräten unterschiedlich. Darunter, dass die Benutzerinformation in Abhängigkeit der Identität des Benutzers und der Identität des Feldgeräts bereitgestellt wird, wird vorliegend verstanden, dass genau die dem jeweiligen Benutzer für das jeweilige Feldgerät zugeordnete Benutzerinformation bereitgestellt wird.

Unter dem Bereitstellen der Benutzerinformation wird beispielsweise verstanden, dass die Sicherheitseinrichtung diese aus einem internen Speicher ausliest und ausgibt, beispielsweise an eine Kommunikationseinheit der Sicherheitseinrichtung, wie beispielsweise ein Modem.

Die Benutzerinformation wird dann an das Mobilgerät des Benutzers übertragen. Das Mobilgerät ist insbesondere ein Smartphone oder ein Notebook des Benutzers. Das Mobilgerät baut mit der Sicherheitseinrichtung eine Kommunikationsverbindung auf, über welche die Benutzerinformation übertragen wird. Die Kommunikationsverbindung kann beispielsweise eine LAN-Verbindung, eine WLAN-Verbindung, eine Mobilfunk-Verbindung, eine Bluetooth-Verbindung und dergleichen mehr umfassen. Die Kommunikationsverbindung ist insbesondere durch eine Verschlüsselung abgesichert. Das Übertragen der Benutzerinformation kann dabei insbesondere zeitlich direkt vor dem Anmelden oder auch deutlich vor dem Anmelden an dem Feldgerät erfolgen. Beispielsweise kann die Benutzerinformation übertragen werden, wenn der Benutzer noch im Büro ist, bevor er zu dem Feldgerät fährt. Die Übertragung kann aber auch unmittelbar vor dem Anmelden erfolgen.

Wenn das Mobilgerät die Benutzerinformation empfangen hat, dann erzeugt es in Abhängigkeit dieser Benutzerinformation eine Anmeldeinformation. Hierunter wird insbesondere verstanden, dass das Mobilgerät beispielsweise eine verschlüsselt übertragene Benutzerinformation entschlüsselt und so die Anmeldeinformation erzeugt. Dabei können weitere Sicherheitsfaktoren zum Einsatz kommen, wie beispielsweise ein Chipkarten-Lesegerät oder die Eingabe eines Passworts oder einer biometrischen Information, wie einem Fingerabdruck oder einem Iris-Scan.

In Ausführungsformen kann unter dem Erzeugen der Anmeldeinformation auch verstanden werden, dass das Mobilgerät die empfangene Benutzerinformation inhaltlich unverändert lässt und in ein von dem Feldgerät lesbares Datenformat bringt und/oder in ein gemäß einem bestimmten Protokoll übertragbares Datenpaket packt. Das Mobilgerät hat dann beispielsweise die Funktion eines Drahtlos-Modems. Insofern ist unter "Erzeugen" nicht unbedingt eine Manipulation der Benutzerinformation oder ein generieren von neuen Daten zu verstehen, sondern die Anmeldeinformation kann auch identisch zu der Benutzerinformation sein.

Die erzeugte Anmeldeinformation ist dazu geeignet, den Benutzer an dem Feldgerät anzumelden oder einzuloggen. Die Anmeldeinformation kann auf unterschiedliche Weise an das Feldgerät übertragen werden. Vorzugsweise erfolgt dies auf automatischem Weg, wobei ein Scanner, ein Mikrofon, eine Datenverbindung oder auch ein Beschleunigungssensor zum Einsatz kommen kann. Beispielsweise erzeugt das Mobilgerät in Abhängigkeit eine modulierte Tonfolge, die die Anmeldeinformation enthält, wobei die Tonfolge von einem Mikrofon erfasst und mittels Demodulation die Anmeldeinformation daraus ermittelt wird.

Dabei kann vorgesehen sein, dass der Benutzer zunächst einen Benutzer- oder Zugangsnamen eingibt. Diese Information ist vorzugsweise jedoch bereits in der Anmeldeinformation enthalten, so dass der Benutzer keine manuelle Eingabe zu tätigen braucht.

Vorteilhaft ermöglicht das Verfahren weiterhin die Anmeldung des Benutzers an dem Feldgerät, ohne dass der Benutzer Kenntnis von der Anmeldeinformation bekommt. Daher ist eine Sicherheit weiter erhöht.

Bei einer Mehrzahl an Feldgeräten ist die Anmeldeinformation für jedes der Feldgeräte vorzugsweise unterschiedlich, so dass es nicht möglich ist, dass der Benutzer sich mit nur einer Anmeldeinformation an mehreren Feldgeräten anmeldet. Dies trägt zu einer erhöhten Sicherheit bei.

Gemäß einer Ausführungsform des Verfahrens ist die Sicherheitseinrichtung lokal bei dem Feldgerät angeordnet.

Unter lokal wird hierbei verstanden, dass die Sicherheitseinrichtung sich im gleichen Raum wie das Feldgerät befindet, vorzugsweise nicht weiter als 3 Meter entfernt von dem Feldgerät. Bei Großgeräten, wie beispielsweise einer Walzanlage oder einer Druckmaschine, bezieht sich die lokale Anordnung insbesondere auf einen zentralen Steuerrechner, sofern ein solcher vorhanden ist.

Ein physischer Zugriff auf die Sicherheitseinrichtung ist daher nur dann möglich, wenn auch ein physischer Zugriff auf das Feldgerät besteht. Eine Manipulation der Sicherheitseinrichtung ist damit erschwert. Die Sicherheitseinrichtung ist hierbei vorzugsweise als ein Mini-PC ausgebildet, der beispielsweise von einem USB-Anschluss mit Strom versorgt werden kann.

Gemäß einer weiteren Ausführungsform des Verfahrens wird die bereitgestellte Benutzerinformation mittels einer lokalen Kommunikationsverbindung zwischen dem Mobilgerät und der Sicherheitseinrichtung übertragen.

Unter einer lokalen Kommunikationsverbindung wird insbesondere eine kurzreichweitige Kommunikationsverbindung verstanden. Eine zuverlässige Kommunikation ist hierbei nur mit geringem Abstand, beispielsweise weniger als 10 Meter, bevorzugt weniger als 5 Meter, weiter bevorzugt weniger als 3 Meter, vorzugsweise unter 1 Meter, zwischen dem Mobilgerät und der Sicherheitseinrichtung möglich. Dies kann sowohl für kabelgebundene Kommunikationsverbindungen als auch für kabellose Kommunikationsverbindungen gelten. Beispiele für eine solche Kommunikationsverbindung sind Bluetooth oder NFC (Near Field Communication).

Insbesondere ist die Sicherheitseinrichtung bei dieser Ausführungsform vorzugsweise nicht mit dem Internet oder einem Intranet verbunden, so dass eine Manipulation der Sicherheitseinrichtung aus der Ferne unmöglich ist. Diese Ausführungsform erhöht eine Sicherheit deutlich.

Gemäß einer weiteren Ausführungsform des Verfahrens ist die Sicherheitseinrichtung zum kryptographisch gesicherten Speichern von Zugangsdaten für wenigstens eine Benutzergruppe einer Mehrzahl von Benutzergruppen des Feldgeräts eingerichtet.

Zudem ist in dem Verfahren eine mit dem Feldgerät koppelbare Empfangsvorrichtung vorgesehen, welche sich an dem Feldgerät als ein Schnittstellengerät anmeldet und über eine Kommunikationsverbindung zu dem Mobilgerät die Anmeldeinformation von dem Mobilgerät empfängt und den Benutzer an dem Feldgerät anmeldet.

Diese Ausführungsform ist besonders vorteilhaft, da sich ein Feldgerät für die automatische Anmeldung nutzbar machen lässt, ohne dass das Feldgerät selbst verändert werden müsste. Die Empfangsvorrichtung ist dabei insbesondere mittels einer an dem Feldgerät bereits vorhandenen Schnittstelle, vorzugsweise drahtgebunden, gekoppelt. Insbesondere lässt sich eine entsprechende Empfangsvorrichtung für jede bekannte Schnittstelle konfigurieren.

Unter einem Schnittstellengerät wird beispielsweise ein Eingabegerät, wie eine Tastatur, eine Computermaus und/oder ein Joystick, verstanden. Die gekoppelte Empfangsvorrichtung ist vorzugsweise nicht tatsächlich als ein Schnittstellengerät ausgebildet, sondern sie meldet sich bei dem Feldgerät lediglich als ein solches an. Man kann auch sagen die Empfangsvorrichtung simuliert ein echtes Schnittstellengerät. Damit ist die Empfangsvorrichtung in der Lage, Schnittstellengerättypische Eingaben an das Feldgerät zu übertragen. Beispielsweise kann sich ein USB-Dongle bei dem Feldgerät als eine Tastatur anmelden, welche zum Eingeben von Zeichenfolgen gemäß bekannten Standards eingerichtet ist.

In bevorzugten Ausführungsformen ist die Empfangsvorrichtung als ein USB-Dongle ausgebildet und mittels einer USB-Schnittstelle an das Feldgerät gekoppelt. Diese Ausführungsform weist den Vorteil auf, dass jedes Feldgerät, das eine USB-Schnittstelle aufweist, für das Verfahren genutzt werden kann. Der USB-Dongle meldet sich als Tastatur bei dem Feldgerät an. Der USB-Dongle weist beispielsweise ein Bluetooth-Modem auf und kann eine Bluetooth-Verbindung zu dem Mobilgerät aufbauen.

Die Kommunikationsverbindung zu der Empfangsvorrichtung ist insbesondere eine lokale Kommunikationsverbindung. Die Kommunikationsverbindung ist insbesondere durch eine Verschlüsselung abgesichert.

Zudem ist Teil des Verfahrens, dass das Mobilgerät zusätzlich zu der Anmeldeinformation und nach dem Anmelden des Benutzers an dem Feldgerät eine Verwaltungseingabe zum Verwalten des Feldgeräts an die Empfangsvorrichtung sendet.

Eine Verwaltungseingabe kann hierbei jeder Befehl sein, der über das Schnittstellengerät, das die Empfangsvorrichtung simuliert, eingebbar ist. Beispielsweise kann ein Mausklick auf bestimmte Koordinaten "simuliert" werden, oder es kann ein Kommandozeilen-Fenster aufgerufen und ein Befehl eingegeben und bestätigt werden.

So lassen sich beispielsweise im Grunde unsichtbar Aktualisierungen durchführen, ohne dass der Benutzer manuell eingreifen müsste. Insbesondere bei sicherheitskritischen Verwaltungsoperationen kann auf diese Weise die Sicherheit weiter erhöht werden.

In Ausführungsformen lassen sich so auch ganze Skripte auf dem Feldgerät erzeugen und/oder ausführen.

Gemäß einer weiteren Ausführungsform des Feldgeräts erzeugt das Mobilgerät die Anmeldeinformation mittels eines kryptographischen Verfahrens in Abhängigkeit der Benutzerinformation.

Unter einem kryptographischen Verfahren wird insbesondere das Anwenden einer Verschlüsselung und/oder ein Authentifikationsverfahren verstanden. Beispiele hierfür sind PKI (Public-Key-Infrastructure) oder OTP (One-Time-Pad).

Gemäß einer weiteren Ausführungsform des Verfahrens umfasst der Schritt a) ein Authentifizieren des Benutzers an dem Mobilgerät und/oder an der Sicherheitseinrichtung.

Beispielsweise authentifiziert sich der Benutzer an dem Mobilgerät mit seinem Fingerabdruck, woraufhin sich das Mobilgerät bei der Sicherheitseinrichtung als das Mobilgerät des Benutzers authentifiziert. Damit ist sichergestellt, dass die Benutzerinformation nur an das Mobilgerät übertragen wird, das auch tatsächlich dem Benutzer gehört, der sich bei dem Feldgerät anmelden möchte.

Zur Erhöhung der Sicherheit kann auch eine zweistufige Authentifizierung des Benutzers vorgesehen sein. Beispielsweise muss sich der Benutzer zunächst gegenüber dem Mobilgerät authentifizieren, so dass dieses von der Sicherheitseinrichtung die Benutzerinformation empfangen kann. Die Benutzerinformation kann beispielsweise einen für jeden Benutzer individuellen zweiten Faktor zur Authentifizierung aufweisen, welchen der Benutzer bereitstellen muss, bevor die Feldgerät-spezifische Anmeldeinformation erzeugt werden kann. Der zweite Faktor kann dabei ein Passwort, ein Gegenstand, wie eine Chipkarte, oder auch ein biometrisches Merkmal des Benutzers sein.

Gemäß einem zweiten Aspekt wird ein Automatisierungssystem mit einer Anzahl an Feldgeräten und wenigstens einer Sicherheitseinrichtung vorgeschlagen. Jedes Feldgerät der Anzahl an Feldgeräten ist durch zumindest einen Benutzer verwaltbar, wobei zum Verwalten eines jeweiligen der Feldgeräte eine Anmeldung bei dem jeweiligen Feldgerät mittels einer Feldgerät-spezifischen Anmeldeinformation erforderlich ist. Ein Mobilgerät des zumindest einen Benutzers ist zum Abrufen einer Benutzerinformation von der Sicherheitseinrichtung in Abhängigkeit einer Identität des zumindest einen Benutzers und einer Identität des jeweiligen Feldgeräts eingerichtet. Das Mobilgerät ist weiterhin zum Erzeugen der Feldgerät-spezifischen Anmeldeinformation in Abhängigkeit der abgerufenen Benutzerinformation und zum Ausgeben der erzeugten Anmeldeinformation eingerichtet.

Dieses Automatisierungssystem kann eines oder mehrere Feldgeräte umfassen. Insbesondere ist das Automatisierungssystem eine industrielle Produktionsanlage mit einer Vielzahl an Feldgeräten, die insgesamt oder teilweise über einen zentralen Steuerrechner verwaltbar sein können. Eine Anmeldung an dem Steuerrechner entspricht damit einer Anmeldung an allen Feldgeräten, die über diesen verwaltbar sind. Insofern kann der Steuerrechner als ein Feldgerät betrachtet werden.

Der zumindest eine Benutzer wird dabei vorzugsweise gemäß dem Verfahren des ersten Aspekts an einem der Feldgeräte angemeldet. Die für das vorgeschlagene Verfahren beschriebenen Ausführungsformen und Merkmale gelten für das vorgeschlagene Automatisierungssystem entsprechend, wobei sich auch die bereits genannten Vorteile ergeben.

Unter einem Feldgerät wird vorliegend insbesondere jedes "smarte" Gerät verstanden, das beispielsweise über eine Sensorik und/oder eine Datenverarbeitung verfügt. Solche Feldgeräte können insbesondere konfiguriert werden, um ihr Verhalten und/oder ihre Funktionen an den jeweils gewünschten Einsatzzweck anzupassen. Das Feldgerät weist hierzu eine Eingabemöglichkeit auf, die insbesondere geschützt ist, beispielsweise durch ein Passwort. Um das Feldgerät zu verwalten, muss daher beispielsweise zunächst das Passwort eingegeben werden. Insbesondere weist das Feldgerät eine Steuersoftware, wie ein Betriebssystem, auf, mittels welchem das Feldgerät verwaltbar ist.

Beispiele für Feldgeräte sind Smart-Home-Geräte, wie intelligente Lichtschalter, Türschlösser, Lüftungs- und/oder Heizungsanlagen und dergleichen, aber auch Geldautomaten, Ticketautomaten, medizintechnische Geräte, wie Röntgengeräte oder Computertomographen, und auch industrielle Produktionsanalgen. Insbesondere kann eine Mehrzahl von Feldgeräten ein Automatisierungssystem bilden. Feldgeräte, die ein Automatisierungssystem bilden, können dabei insbesondere gemeinsam von einem Steuerrechner aus verwaltet werden.

Unter dem Verwalten eines Feldgeräts wird vorzugsweise jede Operation an dem Feldgerät verstanden, die eine Konfiguration oder Einstellung an dem Feldgerät verändert. Unter Verwalten werden insbesondere Service-Operationen, wie ein Aktualisieren einer Software oder Firmware, oder sonstige Funktionstest verstanden. Ein Normalbetrieb des Feldgeräts ist daher insbesondere kein Verwalten des Feldgeräts. Das Setzen von Einstellungen eines Röntgengeräts und das Starten einer Röntgenaufnahme durch einen Bediener, wie beispielsweise einen Arzt, ist vorzugsweise kein Verwalten des Feldgeräts.

Je nach Art und Konfiguration des Feldgeräts kann ein zentraler Verwaltungs-Zugang, wie beispielsweise ein Administrator-Zugang, vorgesehen sein, oder es können unterschiedliche Benutzergruppen vorgesehen sein, wobei ein jeweilige Benutzergruppe zugeordnete Rechte hat. Es kann auch für jeden Benutzer ein individuelles Benutzerkonto vorgesehen sein, wobei jedem Benutzerkonto individuelle Rechte zum Verwalten des Feldgeräts zugeordnet sind.

Diese Feldgeräte sind insbesondere nicht mit dem Internet verbunden oder weisen zumindest keinen aus dem Internet zugänglichen Zugang auf, der das Verwalten des Feldgeräts ermöglicht. Dies ist beispielsweise bei sicherheitskritischen Feldgeräten häufig der Fall. Auf diese Weise kann beispielsweise sichergestellt werden, dass ein Hacker über das Internet keinen Verwaltungszugriff auf das Feldgerät erhalten kann. Eine Anmeldung an dem Feldgerät zum Verwalten des Feldgeräts, beispielsweise durch einen Service-Techniker, kann bei solchen Feldgeräten nur lokal erfolgen, das heißt der Service-Techniker benötigt einen physischen Zugriff auf das Feldgerät.

Die Sicherheitseinrichtung ist beispielsweise als ein Passwort-Safe ausgebildet. Die Sicherheitseinrichtung kann beispielsweise über das Internet oder auch ein internes Intranet zugreifbar sein. Vorzugsweise ist die Sicherheitseinrichtung zum kryptographischen Speichern von Benutzerinformationen für eines oder mehrere der Feldgeräte eingerichtet. Eine Benutzerinformation kann dabei eine für jeden individuellen Benutzer und für jedes Feldgerät gesonderte Information sein. Es kann aber auch vorgesehen sein, dass mehrere Benutzer eine Benutzergruppe bilden, deren Benutzerinformation dann identisch ist. Vorzugsweise ist die Benutzerinformation zumindest für jedes Feldgerät einer Anzahl von Feldgeräten unterschiedlich. Darunter, dass die Benutzerinformation in Abhängigkeit der Identität des Benutzers und der Identität des Feldgeräts abgerufen wird, wird vorliegend verstanden, dass genau die dem jeweiligen Benutzer für das jeweilige Feldgerät zugeordnete Benutzerinformation abgerufen wird. Dies erfolgt insbesondere unter Kontrolle der Sicherheitseinrichtung.

Das Mobilgerät ruft die Benutzerinformation von der Sicherheitseinrichtung ab. Beispielsweise stellt die Sicherheitseinrichtung die Benutzerinformation bereit und diese wird an das Mobilgerät übertragen. Zum Beispiel liest die Sicherheitseinrichtung die Benutzerinformation aus einem internen Speicher aus und sendet diese über eine Kommunikationseinheit der Sicherheitseinrichtung, wie beispielsweise ein Modem, an das Mobilgerät.

Das Mobilgerät ist insbesondere ein Smartphone oder ein Notebook des Benutzers. Das Mobilgerät baut mit der Sicherheitseinrichtung eine Kommunikationsverbindung auf, über welche die Benutzerinformation übertragen wird. Die Kommunikationsverbindung kann beispielsweise eine LAN-Verbindung, eine WLAN-Verbindung, eine Mobilfunk-Verbindung, eine Bluetooth-Verbindung und dergleichen mehr umfassen. Die Kommunikationsverbindung ist insbesondere durch eine Verschlüsselung abgesichert. Das Übertragen der Benutzerinformation kann dabei insbesondere zeitlich direkt vor dem Anmelden oder auch deutlich vor dem Anmelden an dem Feldgerät erfolgen. Beispielsweise kann die Benutzerinformation übertragen werden, wenn der Benutzer noch im Büro ist, bevor er zu dem Feldgerät fährt. Die Übertragung kann aber auch unmittelbar vor dem Anmelden erfolgen.

Wenn das Mobilgerät die Benutzerinformation empfangen hat, dann erzeugt es in Abhängigkeit dieser Benutzerinformation eine Anmeldeinformation. Hierunter wird insbesondere verstanden, dass das Mobilgerät beispielsweise eine verschlüsselt übertragene Benutzerinformation entschlüsselt und so die Anmeldeinformation erzeugt. Dabei können weitere Sicherheitsfaktoren zum Einsatz kommen, wie beispielsweise ein Chipkarten-Lesegerät oder die Eingabe eines Passworts oder einer biometrischen Information, wie einem Fingerabdruck oder einem Iris-Scan.

In Ausführungsformen kann unter dem Erzeugen der Anmeldeinformation auch verstanden werden, dass das Mobilgerät die empfangene Benutzerinformation inhaltlich unverändert lässt und in ein von dem Feldgerät lesbares Datenformat bringt und/oder in ein gemäß einem bestimmten Protokoll übertragbares Datenpaket packt. Das Mobilgerät hat dann beispielsweise die Funktion eines Drahtlos-Modems. Insofern ist unter "Erzeugen" nicht unbedingt eine Manipulation der Benutzerinformation oder ein generieren von neuen Daten zu verstehen, sondern die Anmeldeinformation kann auch identisch zu der Benutzerinformation sein.

Die erzeugte Anmeldeinformation ist dazu geeignet, den Benutzer an dem Feldgerät anzumelden oder einzuloggen. Hierzu wird die Anmeldeinformation von dem Mobilgerät ausgegeben, insbesondere an das Feldgerät übertragen. Die Anmeldeinformation kann auf unterschiedliche Weise an das Feldgerät übertragen werden. Vorzugsweise erfolgt dies auf automatischem Weg, wobei ein Scanner, ein Mikrofon, eine Datenverbindung oder auch ein Beschleunigungssensor zum Einsatz kommen kann. Beispielsweise erzeugt das Mobilgerät in Abhängigkeit eine modulierte Tonfolge, die die Anmeldeinformation enthält, wobei die Tonfolge von einem Mikrofon erfasst und mittels Demodulation die Anmeldeinformation daraus ermittelt wird.

Dabei kann vorgesehen sein, dass der Benutzer zunächst einen Benutzer- oder Zugangsnamen eingibt. Diese Information ist vorzugsweise jedoch bereits in der Anmeldeinformation enthalten, so dass der Benutzer keine manuelle Eingabe zu tätigen braucht.

Bei einer Mehrzahl an Feldgeräten ist die Anmeldeinformation für jedes der Feldgeräte vorzugsweise unterschiedlich, so dass es nicht möglich ist, dass der Benutzer sich mit nur einer Anmeldeinformation an mehreren Feldgeräten anmeldet. Dies trägt zu einer erhöhten Sicherheit bei.

Gemäß einer Ausführungsform des Automatisierungssystems bildet die Anzahl an Feldgeräten eine lokale Gruppe, wobei die Sicherheitseinrichtung lokal bei der Gruppe angeordnet ist.

Unter einer lokalen Gruppe wird beispielsweise eine Anzahl von räumlich nahe beieinander angeordneten Feldgeräten verstanden, die einen Abstand von weniger als 10 Meter, bevorzugt weniger als 5 Meter, weiter bevorzugt weniger als 3 Meter, vorzugsweise unter 1 Meter zueinander aufweisen. Insbesondere können einzelne der Feldgeräte der lokalen Gruppe auch funktional zusammenarbeiten und/oder voneinander abhängig sein.

Unter einer lokalen Anordnung wird hierbei eine Anordnung mit einem geringen Abstand verstanden.

Gemäß einer weiteren Ausführungsform des Automatisierungssystems ist das Mobilgerät zum Abrufen der Benutzerinformation mittels einer lokalen Kommunikationsverbindung zu der Sicherheitseinrichtung eingerichtet ist.

Unter einer lokalen Kommunikationsverbindung wird insbesondere eine kurzreichweitige Kommunikationsverbindung verstanden. Eine zuverlässige Kommunikation ist hierbei nur mit geringem Abstand, beispielsweise weniger als 10 Meter, bevorzugt weniger als 5 Meter, weiter bevorzugt weniger als 3 Meter, vorzugsweise unter 1 Meter, zwischen dem Mobilgerät und der Sicherheitseinrichtung möglich. Dies kann sowohl für kabelgebundene Kommunikationsverbindungen als auch für kabellose Kommunikationsverbindungen gelten. Beispiele für eine solche Kommunikationsverbindung sind Bluetooth oder NFC (Near Field Communication).

Gemäß einer weiteren Ausführungsform des Automatisierungssystems weist wenigstens eines der Feldgeräte der Anzahl eine gekoppelte Empfangsvorrichtung auf, die sich bei dem Feldgerät als ein Schnittstellengerät anmeldet, wobei das Mobilgerät zum Herstellen einer Kommunikationsverbindung mit der Empfangsvorrichtung eingerichtet ist, wobei das Mobilgerät zum Übertragen der Anmeldeinformation an die Empfangsvorrichtung über die Kommunikationsverbindung und die Empfangsvorrichtung zum Anmelden des Benutzers an dem Feldgerät eingerichtet ist.

Diese Ausführungsform ist besonders vorteilhaft, da sich das Feldgerät für die automatische Anmeldung nutzbar machen lässt, ohne dass das Feldgerät selbst verändert werden müsste. Die Empfangsvorrichtung ist dabei insbesondere mittels einer an dem Feldgerät bereits vorhandenen Schnittstelle, vorzugsweise drahtgebunden, gekoppelt. Insbesondere lässt sich eine entsprechende Empfangsvorrichtung für jede bekannte Schnittstelle konfigurieren. Somit lassen sich auch bezüglich der verfügbaren Schnittstelle veraltete Feldgeräte entsprechend nutzen.

Unter einem Schnittstellengerät wird beispielsweise ein Eingabegerät, wie eine Tastatur, eine Computermaus und/oder ein Joystick, verstanden. Die gekoppelte Empfangsvorrichtung ist vorzugsweise nicht tatsächlich als ein Schnittstellengerät ausgebildet, sondern sie meldet sich bei dem Feldgerät lediglich als ein solches an. Man kann auch sagen die Empfangsvorrichtung simuliert ein echtes Schnittstellengerät. Damit ist die Empfangsvorrichtung in der Lage, Schnittstellengerättypische Eingaben an das Feldgerät zu übertragen. Beispielsweise kann sich ein USB-Dongle bei dem Feldgerät als eine Tastatur anmelden, welche zum Eingeben von Zeichenfolgen gemäß bekannten Standards eingerichtet ist.

In bevorzugten Ausführungsformen ist die Empfangsvorrichtung als ein USB-Dongle ausgebildet und mittels einer USB-Schnittstelle an das Feldgerät gekoppelt. Diese Ausführungsform weist den Vorteil auf, dass jedes Feldgerät, das eine USB-Schnittstelle aufweist, für das Verfahren genutzt werden kann. Der USB-Dongle meldet sich als Tastatur bei dem Feldgerät an. Der USB-Dongle weist beispielsweise ein Bluetooth-Modem auf und kann eine Bluetooth-Verbindung zu dem Mobilgerät aufbauen.

Die Kommunikationsverbindung zu der Empfangsvorrichtung ist insbesondere eine lokale Kommunikationsverbindung. Die Kommunikationsverbindung ist insbesondere durch eine Verschlüsselung abgesichert.

Gemäß einer weiteren Ausführungsform des Automatisierungssystems ist das Mobilgerät zum Erzeugen einer Verwaltungseingabe zum Verwalten des Feldgeräts und zum Übertragen der Verwaltungseingabe an die Empfangsvorrichtung nach einem Anmelden des Benutzers an dem Feldgerät eingerichtet.

Eine Verwaltungseingabe kann hierbei weitere Befehl sein, der über das Schnittstellengerät, das die Empfangsvorrichtung simuliert, eingebbar ist. Beispielsweise kann ein Mausklick auf bestimmte Koordinaten "simuliert" werden, oder es kann ein Kommandozeilen-Fenster aufgerufen und ein Befehl eingegeben und bestätigt werden.

So lassen sich beispielsweise im Grunde unsichtbar Aktualisierungen durchführen, ohne dass der Benutzer manuell eingreifen müsste. Insbesondere bei sicherheitskritischen Verwaltungsoperationen kann auf diese Weise die Sicherheit weiter erhöht werden.

In Ausführungsformen lassen sich so auch ganze Skripte auf dem Feldgerät erzeugen und/oder ausführen.

Gemäß einer weiteren Ausführungsform des Automatisierungssystems ist das Mobilgerät zum Abrufen der Benutzerinformation und/oder zum Erzeugen der Anmeldeinformation mittels eines kryptographischen Verfahrens eingerichtet.

Unter einem kryptographischen Verfahren wird insbesondere das Anwenden einer Verschlüsselung und/oder ein Authentifikationsverfahren verstanden. Beispiele hierfür sind PKI (Public-Key-Infrastructure) oder OTP (One-Time-Pad).

Gemäß einer weiteren Ausführungsform des Automatisierungssystems ist eine Kommunikationsverbindung zum Abrufen der Benutzerinformation und/oder eine Kommunikationsverbindung zum Übertragen der Anmeldeinformation eine lokale Kommunikationsverbindung.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt wird ein Automatisierungssystem mit einer Anzahl an Feldgeräten und wenigstens einer lokal bei einem der Feldgeräte der Anzahl angeordneten Sicherheitseinrichtung vorgeschlagen. Jedes Feldgerät der Anzahl ist durch Benutzer verwaltbar, wobei zum Verwalten eines der Feldgeräte eine Anmeldung bei dem jeweiligen Feldgerät mittels einer Feldgerät-spezifischen Anmeldeinformation erforderlich ist. Ein Mobilgerät des Benutzers ist zum Abrufen einer Benutzerinformation von der Sicherheitseinrichtung in Abhängigkeit einer Identität des Benutzers und einer Identität des Feldgeräts mittels einer lokalen Kommunikationsverbindung eingerichtet. Das Mobilgerät ist weiterhin zum Erzeugen der Feldgerät-spezifischen Anmeldeinformation in Abhängigkeit der abgerufenen Benutzerinformation und zum Ausgeben der erzeugten Anmeldeinformation eingerichtet.

Vorteilhaft kann hierdurch eine Sicherheit für den Zugang zu sicherheitskritischen Feldgeräten erhöht werden, da eine physische Anwesenheit des Benutzers sowohl zum Abrufen der Benutzerinformation als auch zum Anmelden an dem jeweiligen Feldgerät notwendig ist. Der Benutzer wird hierbei vorzugsweise mittels des Mobilgeräts authentifiziert, zum Beispiel durch ein biometrisches Kennzeichen. Die Ausführungsformen und Merkmale des Automatisierungssystems gemäß dem zweiten Aspekt gelten für das vorgeschlagene Automatisierungssystem entsprechend.

Zur Erhöhung der Sicherheit kann auch eine zweistufige Authentifizierung des Benutzers vorgesehen sein. Beispielsweise muss sich der Benutzer zunächst gegenüber dem Mobilgerät authentifizieren, so dass dieses von der Sicherheitseinrichtung die Benutzerinformation empfangen kann. Die Benutzerinformation kann beispielsweise einen für jeden Benutzer individuellen zweiten Faktor zur Authentifizierung aufweisen, welchen der Benutzer bereitstellen muss, bevor die Feldgerät-spezifische Anmeldeinformation erzeugt werden kann. Der zweite Faktor kann dabei ein Passwort, ein Gegenstand, wie eine Chipkarte, oder auch ein biometrisches Merkmal des Benutzers sein.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels eines Automatisierungssystems;
- Fig. 2: zeigt ein schematisches Blockschaltbild eines zweiten Ausführungsbeispiels eines Automatisierungssystems;
- Fig. 3: zeigt ein schematisches Blockschaltbild eines dritten Ausführungsbeispiels eines Automatisierungssystems; und
- Fig. 4: zeigt ein schematisches Blockschaltbild eines Ausführungsbeispiels eines Verfahrens zum automatischen Anmelden eines Benutzers an einem Feldgerät.

In den Figuren sind gleiche oder funktionsgleiche Elemente mit denselben Bezugszeichen versehen worden, sofern nichts anderes angegeben ist.

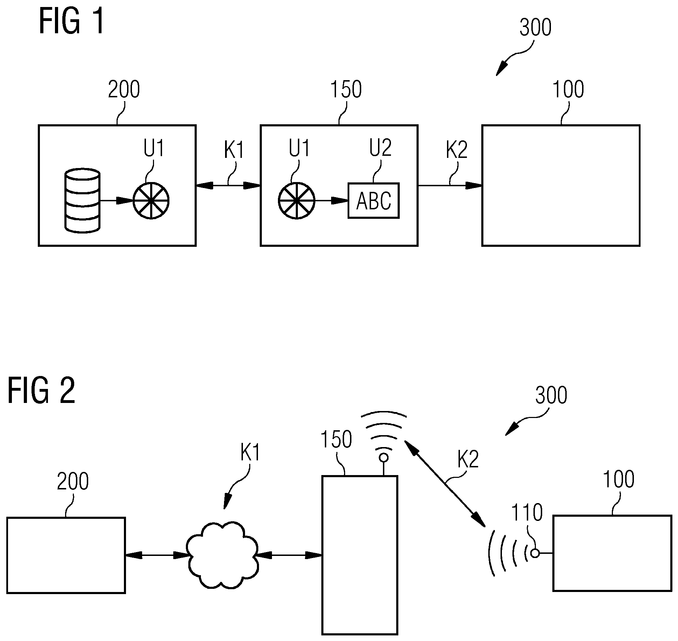

Fig. 1 zeigt ein schematisches Blockschaltbild eines ersten Ausführungsbeispiels eines Automatisierungssystems 300, das beispielsweise eine industrielle Produktionsanlage ist. Die industrielle Produktionsanlage 300 weist hier ohne Einschränkung der Allgemeinheit nur ein Feldgerät 100 auf, das beispielsweise ein Steuerrechner der industriellen Produktionsanlage 300 ist. Über den Steuerrechner 100 lässt sich beispielsweise die Produktion der industriellen Produktionsanlage 300 steuern. Wenn die industrielle Produktionsanlage 300 um einzelne Maschinen erweitert und/oder verändert wird, ist dies entsprechend an dem Steuerrechner 100 zu konfigurieren. Hierzu muss sich ein entsprechend geschulter Benutzer, beispielsweise ein Service-Techniker, an dem Steuerrechner 100 anmelden, um diese Konfiguration vorzunehmen, wobei auch von einem Verwalten des Steuerrechners 100 gesprochen wird.

Der Benutzer muss dabei über die entsprechenden Rechte verfügen, um Änderungen an der Konfiguration vornehmen zu dürfen. Hierzu ist beispielsweise ein Administrator-Konto auf dem Steuerrechner 100 eingerichtet. Das Administrator-Konto ist insbesondere mit einem starken Passwort, das beispielsweise 250 Zeichen lang ist und eine zufällige Mischung an Groß- und Kleinbuchstaben, Ziffern sowie Sonderzeichen enthält, geschützt. Ein solches Passwort von Hand einzugeben wäre sehr zeitaufwändig und fehleranfällig. Daher führt der Benutzer ein Mobilgerät 150 mit sich, das hier als ein Smartphone ausgebildet ist. Sobald der Benutzer bei dem Steuerrechner 100 ist, stößt er beispielsweise über eine spezielle Applikation in dem Smartphone 150 den Anmeldeprozess an. Dabei stellt das Smartphone 150 eine Kommunikationsverbindung K1 zu einer Sicherheitseinrichtung 200 her, die hier als ein Server ausgebildet ist. Der Server 200 weist ein kryptographisches Speichersystem auf, in welchem Zugangsdaten für eine Vielzahl von Benutzern und/oder eine Vielzahl von Feldgeräten 100 gespeichert sind. Auf Anfrage des Smartphones 150 stellt der Server 200 in Abhängigkeit der Identität des Benutzers und des Feldgeräts, an welchem dieser sich anmelden möchte, eine Benutzerinformation U1 bereit und überträgt diese an das Smartphone 150.

Das Smartphone 150 empfängt die Benutzerinformation U1 und erzeugt daraus eine Anmeldeinformation U2, die hier beispielsweise einen Zugangsnamen für den Administrator-Zugang sowie das zugehörige Passwort umfasst. Insbesondere entschlüsselt das Smartphone 150 hierzu die empfangene Benutzerinformation U1. Es kann auch vorgesehen sein, dass das Smartphone 150 die empfangene Benutzerinformation U1 unverändert als die Anmeldeinformation U2 weiterleitet.

Über eine Übertragungsstrecke K2 überträgt das Smartphone 150 daraufhin die Anmeldeinformation U2 an das Feldgerät 100, um den Benutzer in das Administrator-Konto einzuloggen. Die Übertragungsstrecke K2 ist beispielsweise eine drahtlose Übertragungsverbindung, es kann sich insbesondere auch um eine Signalübertragung auf optischem, akustischem und/oder mechanischem Weg handeln. Beispielsweise könnte das Smartphone die Anmeldeinformation U2 als einen Strichcode oder einen QR-Code auf einem Bildschirm anzeigen, und eine an dem Steuerrechner 100 angeordnete Kamera (nicht gezeigt) erfasst den Bildschirminhalt des Smartphones 150.

Somit kann sich der Benutzer problemlos als Administrator bei dem Steuerrechner 100 anmelden, der mit einem sehr starken Passwort geschützt ist.

Das beschriebene Verfahren ist vorzugsweise dann anzuwenden, wenn das Feldgerät 100 keinen Fernzugriff, beispielsweise über das Internet, erlaubt.

Fig. 2 zeigt ein schematisches Blockschaltbild eines zweiten Ausführungsbeispiels eines Automatisierungssystems 300. Das zweite Ausführungsbeispiel weist die gleichen Merkmale wie das erste Ausführungsbeispiel auf, wobei zusätzliche Merkmale nachfolgend beschrieben sind.

Beispielsweise handelt es sich bei dem Feldgerät 100 in diesem Beispiel um eine Messeinrichtung, die veraltet ist und mit einer veralteten und unsicheren Steuersoftware betrieben wird. Daher weist die Messeinrichtung 100 keinen Internetzugang auf und kann nur vor Ort verwaltet werden. Außer relativ alten Schnittstellen, wie beispielsweise RS-232, PS/2 oder USB 1.0, weist die Messeinrichtung 100 ferner keine Kommunikationsschnittstellen auf. Um eine automatisierte Anmeldung des Benutzers zu erreichen, wurde die Messeinrichtung 100 mit einer Empfangsvorrichtung 110, die hier als ein USB-Dongle ausgebildet ist, der sich bei der Messeinrichtung 100 als eine Tastatur anmeldet, ausgerüstet. Der USB-Dongle 110 ist insbesondere zum Herstellen einer NFC-Verbindung K2 eingerichtet.

Um sich bei der Messeinrichtung 100 anzumelden, ruft der Benutzer mit dem als Smartphone ausgebildeten Mobilgerät 150 über eine Kommunikationsverbindung K1, die hier als eine Mobilfunk-Verbindung ausgebildet ist, von einer zentralen Sicherheitseinrichtung 200 eine Benutzerinformation U1 (siehe Fig. 1) ab. Das Smartphone 150 erzeugt aus dieser Benutzerinformation U1 die Anmeldeinformation U2 (siehe Fig. 1). Der Benutzer bringt das Smartphone 150 daraufhin in die Nähe das USB-Dongle 110, wobei das Smartphone 150 die NFC-Verbindung K2 zu dem USB-Dongle 110 aufbaut und über diese Verbindung K2 die Anmeldeinformation U2 überträgt.

Der USB-Dongle 110 empfängt die Anmeldeinformation U2 und gibt diese an die Messeinrichtung 100 aus, wobei die Messeinrichtung 100 hierbei über den USB-Port das gleiche Signal empfängt, als würde der Benutzer die Anmeldeinformation U2 über eine physikalische Tastatur eingeben.

Somit wird der Benutzer automatisch an der Messeinrichtung 100 angemeldet, weshalb auch hier ein starkes Passwort zur Sicherung des Zugangs verwendet werden kann, ohne dass die Anmeldung ein Problem darstellt.

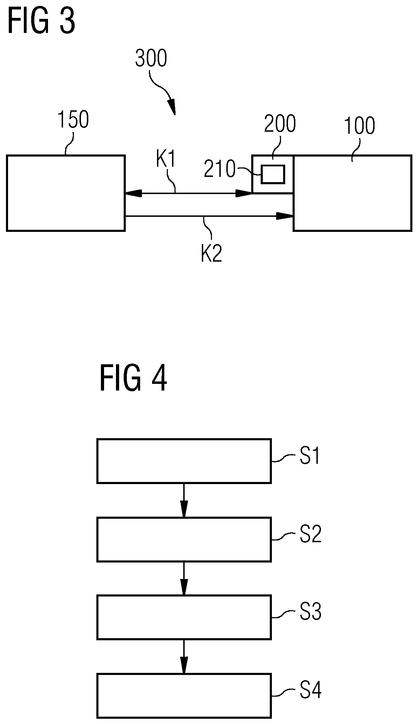

Fig. 3 zeigt ein schematisches Blockschaltbild eines dritten Ausführungsbeispiels eines Automatisierungssystems 300. Bei dem dargestellten Automatisierungssystem 300 handelt es sich beispielsweise um ein sicherheitskritisches System, wie ein Kraftwerk. Es ist auch hier ohne Einschränkung der Allgemeinheit nur ein Feldgerät 100 dargestellt.

Bei dem Kraftwerk 300 ist es aus Sicherheitsgründen unerwünscht, dass Zugangsdaten wie Benutzerinformationen U1 (siehe Fig. 1) oder Anmeldeinformationen U2 (siehe Fig. 1) außerhalb des Kraftwerks 300 und/oder zentral gespeichert sind. Daher ist die Sicherheitseinrichtung 200 lokal bei dem Feldgerät 100 angeordnet. Weiterhin existiert weder von der Sicherheitseinrichtung 200 noch von dem Feldgerät 100 eine Kommunikationsverbindung nach außen.

Der Benutzer muss daher physisch anwesend sein, um das Feldgerät 100 zu verwalten. Hierzu stellt der Benutzer mit seinem Mobilgerät 150 eine lokale Kommunikationsverbindung K1 mit der Sicherheitseinrichtung 200 her, beispielsweise eine NFC-Verbindung. Die Sicherheitseinrichtung 200 umfasst einen Zugangsdaten-Speicher 210, welcher beispielsweise Zugangsdaten für eine Mehrzahl an Benutzern speichert. Die dem Benutzer zugeordnete Benutzerinformation U1 wird von der Sicherheitseinrichtung 200 aus dem Zugangsdaten-Speicher 210 ausgelesen und über die Kommunikationsverbindung K1 an das Mobilgerät 150 übertragen. Die Benutzerinformation U1 ist insbesondere kryptographisch mittels OTP (One-Time-Pad) gesichert, so dass der Benutzer oder das Mobilgerät zunächst einen entsprechenden kryptographischen Schlüssel erzeugen muss, mit dem diese entschlüsselt werden kann. Auf diese Weise wird die Anmeldeinformation U2 in kryptographisch gesicherter Weise erzeugt.

Die Anmeldeinformation U2 wird von dem Mobilgerät 150 über eine lokale Kommunikationsverbindung K2, beispielsweise Bluetooth, an das Feldgerät 100 oder an eine Empfangsvorrichtung 110 (siehe Fig. 2) übertragen. Damit wird der Benutzer an dem Feldgerät 100 automatisch eingeloggt.

Im Anschluss daran kann der Benutzer über die lokale Kommunikationsverbindung K2 weitere Verwaltungseingaben an das Feldgerät 100 übermitteln, so dass ein Verwalten des Feldgeräts 100 mittels des Mobilgeräts 150 möglich ist. Insbesondere kann das Verwalten nach der Anmeldung des Benutzers auch vollautomatisch erfolgen, beispielsweise indem vorbestimmte Skripte und/oder Befehlsfolgen von dem Mobilgerät 150 an das Feldgerät 100 übertragen werden.

Fig. 4 zeigt ein schematisches Blockschaltbild eines Ausführungsbeispiels eines Verfahrens zum automatischen Anmelden eines Benutzers an einem Feldgerät 100 (siehe Fig. 1 - 3).

In einem ersten Schritt S1 wird eine Benutzerinformation U1 (siehe Fig. 1) in Abhängigkeit einer Identität des Benutzers und einer Identität des Feldgeräts 100 durch eine Sicherheitseinrichtung 200 (siehe Fig. 1 - 3) bereitgestellt. Insbesondere wird die Benutzerinformation U1 aus einem kryptographisch gesicherten Speicher, wie zum Beispiel einem Zugangsdaten-Speicher 210 (siehe Fig. 3), ausgelesen. Dabei kann eine Authentifizierung des Benutzers und/oder des Mobilgeräts 150 (siehe Fig. 1 - 3) vorgesehen sein.

In einem zweiten Schritt S2 wird die bereitgestellte Benutzerinformation U1 an das Mobilgerät 150 des Benutzers übertragen. Das Übertragen kann hierbei über eine drahtgebundene oder drahtlose Kommunikationsverbindung K1 (siehe Fig. 1 - 3) erfolgen. Die Kommunikationsverbindung K1 kann dabei zur Erhöhung der Sicherheit eine lokale Verbindung sein, die nur einen geringen Abstand des Mobilgeräts 150 von der Sicherheitseinrichtung 200 zulässt. Die Übertragung erfolgt vorzugsweise kryptographisch gesichert, also insbesondere verschlüsselt.

In einem dritten Schritt S3 erzeugt das Mobilgerät 150 eine Feldgerät-spezifische Anmeldeinformation U2 (siehe Fig. 1) in Abhängigkeit der übertragenen Benutzerinformation U1. Beispielsweise entschlüsselt das Mobilgerät 150 die verschlüsselt übertragene Benutzerinformation U1.

In einem vierten Schritt S4 wird der Benutzer an dem Feldgerät 100 mittels der erzeugten Anmeldeinformation U2 angemeldet. Das Anmelden erfolgt insbesondere automatisch, also ohne, dass der Benutzer die Anmeldeinformation U2 selbst eingeben müsste. Hierzu ist insbesondere eine lokale Kommunikationsverbindung K2 (siehe Fig. 1 - 3) von dem Mobilgerät 150 zu dem Feldgerät 100 oder zu einer mit dem Feldgerät 100 gekoppelten Empfangsvorrichtung 110 (siehe Fig. 2) vorgesehen. Die Übertragung der Anmeldeinformation U2 über die Kommunikationsverbindung K2 erfolgt dabei insbesondere verschlüsselt. Dabei kann die Anmeldeinformation auch vor dem Benutzer selbst geheim gehalten werden, was eine Sicherheit weiter erhöht.

## Patentansprüche

1. Verfahren zum automatischen Anmelden eines Benutzers an einem Feldgerät (100) zum Verwalten des Feldgeräts (100), mit
a) Bereitstellen (S1) einer Benutzerinformation (U1) in Abhängigkeit einer Identität des Benutzers und einer Identität des Feldgeräts (100) durch eine Sicherheitseinrichtung (200),
b) Übertragen (S2) der bereitgestellten Benutzerinformation (U1) an ein Mobilgerät (150) des Benutzers,
c) Erzeugen (S3) einer Feldgerät-spezifischen Anmeldeinformation (U2) in Abhängigkeit der übertragenen Benutzerinformation (U1) durch das Mobilgerät (150), und
d) Anmelden (S4) des Benutzers an dem Feldgerät (100) mittels der erzeugten Anmeldeinformation (U2),
**dadurch gekennzeichnet, dass** eine mit dem Feldgerät (100) koppelbare Empfangsvorrichtung (110) vorgesehen ist, die sich an dem Feldgerät (100) als ein Schnittstellengerät anmeldet und welche über eine Kommunikationsverbindung (K2) zu dem Mobilgerät (150) die Anmeldeinformation (U2) von dem Mobilgerät (150) empfängt und den Benutzer an dem Feldgerät (100) anmeldet und das Mobilgerät (150) zusätzlich zu der Anmeldeinformation (U2) und nach dem Anmelden des Benutzers an dem Feldgerät (100) eine Verwaltungseingabe zum Verwalten des Feldgeräts (100) an die Empfangsvorrichtung (110) sendet.

2. Verfahren nach Anspruch 1,
**dadurch gekennzeichnet,**
**dass** die Sicherheitseinrichtung (200) lokal bei dem Feldgerät (100) angeordnet ist.

3. Verfahren nach Anspruch 2,
**dadurch gekennzeichnet,**
**dass** die bereitgestellte Benutzerinformation (U1) mittels einer lokalen Kommunikationsverbindung (K1) zwischen dem Mobilgerät (150) und der Sicherheitseinrichtung (200) übertragen wird.

4. Verfahren nach einem der Ansprüche 1 - 3,
**dadurch gekennzeichnet,**
**dass** die Sicherheitseinrichtung (200) zum kryptographisch gesicherten Speichern von Zugangsdaten für wenigstens eine Benutzergruppe einer Mehrzahl von Benutzergruppen des Feldgeräts (100) eingerichtet ist.

5. Verfahren nach einem der Ansprüche 1 - 4,
**dadurch gekennzeichnet,**
**dass** das Mobilgerät (150) die Anmeldeinformation (U2) mittels eines kryptographischen Verfahrens in Abhängigkeit der Benutzerinformation (U1) erzeugt.

6. Verfahren nach einem der Ansprüche 1 - 5,
**dadurch gekennzeichnet,**
**dass** der Schritt a) ein Authentifizieren des Benutzers an dem Mobilgerät (150) und/oder an der Sicherheitseinrichtung (200) umfasst.

7. Automatisierungssystem (300) mit einer Anzahl an Feldgeräten (100) und wenigstens einer Sicherheitseinrichtung (200), wobei jedes Feldgerät (100) der Anzahl an Feldgeräten (100) durch zumindest einen Benutzer verwaltbar ist, wobei zum Verwalten eines jeweiligen der Feldgeräte (100) eine Anmeldung bei dem jeweiligen Feldgerät (100) mittels einer Feldgerät-spezifischen Anmeldeinformation (U2) erforderlich ist, wobei ein Mobilgerät (150) des zumindest einen Benutzers zum Abrufen einer Benutzerinformation (U1) von der Sicherheitseinrichtung (200) in Abhängigkeit einer Identität des zumindest einen Benutzers und einer Identität des jeweiligen Feldgeräts (100) eingerichtet ist, und wobei das Mobilgerät (150) zum Erzeugen der Feldgerät-spezifischen Anmeldeinformation (U2) in Abhängigkeit der abgerufenen Benutzerinformation (U1) und zum Ausgeben der erzeugten Anmeldeinformation (U2) eingerichtet ist, **dadurch gekennzeichnet, dass**
- wenigstens eines der Feldgeräte (100) der Anzahl an Feldgeräten (100) eine gekoppelte Empfangsvorrichtung (110) aufweist, die so eingerichtet ist, dass sie sich an dem Feldgerät (100) als ein Schnittstellengerät anmeldet, wobei das Mobilgerät (150) zum Herstellen einer Kommunikationsverbindung (K2) mit der Empfangsvorrichtung (110) eingerichtet ist, wobei das Mobilgerät (150) zum Übertragen der Anmeldeinformation (U2) an die Empfangsvorrichtung (110) über die Kommunikationsverbindung (K2) und die Empfangsvorrichtung (110) zum Anmelden des zumindest einen Benutzers an dem Feldgerät (100) eingerichtet ist, und
- das Mobilgerät (150) zum Erzeugen einer Verwaltungseingabe zum Verwalten des Feldgeräts (100) und zum Übertragen der Verwaltungseingabe an die Empfangsvorrichtung (110) nach einem Anmelden des zumindest einen Benutzers an dem Feldgerät (100) eingerichtet ist.

8. Automatisierungssystem (300) nach Anspruch 7,
**dadurch gekennzeichnet,**
**dass** die Anzahl an Feldgeräten (100) eine lokale Gruppe bildet, wobei die Sicherheitseinrichtung (200) lokal bei der Gruppe angeordnet ist.

9. Automatisierungssystem (300) nach Anspruch 8,
**dadurch gekennzeichnet,**
**dass** das Mobilgerät (150) zum Abrufen der Benutzerinformation (U1) mittels einer lokalen Kommunikationsverbindung (K1) zu der Sicherheitseinrichtung (200) eingerichtet ist.

10. Automatisierungssystem (300) nach einem der Ansprüche 7 - 9,
**dadurch gekennzeichnet,**
**dass** das Mobilgerät zum Abrufen der Benutzerinformation (U1) und/oder zum Erzeugen der Anmeldeinformation (U2) mittels eines kryptographischen Verfahrens eingerichtet ist.

11. Automatisierungssystem (300) nach einem der Ansprüche 7 - 10,
**dadurch gekennzeichnet,**
**dass** die Kommunikationsverbindung (K1) zum Abrufen der Benutzerinformation (U1) und/oder die Kommunikationsverbindung (K2) zum Übertragen der Anmeldeinformation (U2) eine lokale Kommunikationsverbindung (K1, K2) ist.

## Claims

1. Method for automatically registering a user on a field device (100) for the purpose of administering the field device (100), comprising
a) providing (S1) user information (U1) on the basis of an identity of the user and an identity of the field device (100) by way of a security device (200),
b) transmitting (S2) the provided user information (U1) to a mobile device (150) of the user,
c) generating (S3) field-device-specific registration information (U2) on the basis of the transmitted user information (U1) by way of the mobile device (150), and
d) registering (S4) the user on the field device (100) by means of the generated registration information (U2),
**characterized in that**
there is provision for a receiving apparatus (110), couplable to the field device (100), that registers on the field device (100) as an interface device and that uses a communication connection (K2) to the mobile device (150) to receive the registration information (U2) from the mobile device (150) and registers the user on the field device (100), and the mobile device (150) sends an administration input for administering the field device (100) to the receiving apparatus (110) in addition to the registration information (U2) and after the user has been registered on the field device (100).

2. Method according to Claim 1,
**characterized**
**in that** the security device (200) is arranged locally to the field device (100).

3. Method according to Claim 2,
**characterized**
**in that** the provided user information (U1) is transmitted between the mobile device (150) and the security device (200) by means of a local communication connection (K1).

4. Method according to one of Claims 1-3,
**characterized**
**in that** the security device (200) is configured for cryptographically secure storage of access data for at least one user group from a plurality of user groups of the field device (100).

5. Method according to one of Claims 1-4,
**characterized**
**in that** the mobile device (150) generates the registration information (U2) by means of a cryptographic method on the basis of the user information (U1).

6. Method according to one of Claims 1-5,
**characterized**
**in that** step a) comprises authentication of the user on the mobile device (150) and/or on the security device (200).

7. Automation system (300) having a number of field devices (100) and at least one security device (200), wherein each field device (100) from the number of field devices (100) is administrable by at least one user, wherein administering a respective instance of the field devices (100) requires registration with the respective field device (100) by means of field-device-specific registration information (U2), wherein a mobile device (150) of the at least one user is configured for retrieving user information (U1) from the security device (200) on the basis of an identity of the at least one user and an identity of the respective field device (100), and wherein the mobile device (150) is configured for generating the field-device-specific registration information (U2) on the basis of the retrieved user information (U1) and for outputting the generated registration information (U2),
**characterized in that**
- at least one of the field devices (100) from the number of field devices (100) has a coupled receiving apparatus (110) that is configured to register on the field device (100) as an interface device, wherein the mobile device (150) is configured for making a communication connection (K2) to the receiving apparatus (110), wherein the mobile device (150) is configured for transmitting the registration information (U2) to the receiving apparatus (110) via the communication connection (K2), and the receiving apparatus (110) is configured for registering the at least one user on the field device (100), and
- the mobile device (150) is configured for generating an administration input for administering the field device (100) and for transmitting the administration input to the receiving apparatus (110) after the at least one user has been registered on the field device (100).

8. Automation system (300) according to Claim 7,
**characterized**
**in that** the number of field devices (100) forms a local group, wherein the security device (200) is arranged locally to the group.

9. Automation system (300) according to Claim 8,
**characterized**
**in that** the mobile device (150) is configured for retrieving the user information (U1) by means of a local communication connection (K1) to the security device (200).

10. Automation system (300) according to one of Claims 7-9,
**characterized**
**in that** the mobile device is configured for retrieving the user information (U1) and/or for generating the registration information (U2) by means of a cryptographic method.

11. Automation system (300) according to one of Claims 7-10,
**characterized**
**in that** the communication connection (K1) for retrieving the user information (U1) and/or the communication connection (K2) for transmitting the registration information (U2) is a local communication connection (K1, K2).

## Revendications

1. Procédé d'enregistrement automatique d'un utilisateur sur un appareil de terrain (100) pour gérer l'appareil de terrain (100), avec
a) mise à disposition (S1) d'une information utilisateur (U1) en fonction d'une identité de l'utilisateur et d'une identité de l'appareil de terrain (100) par un dispositif de sécurité (200),
b) transmission (S2) de l'information utilisateur (U1) mise à disposition à un appareil mobile (150) de l'utilisateur,
c) production (S3) d'une information d'enregistrement (U2) spécifique à l'appareil de terrain en fonction de l'information utilisateur transmise (U1) par l'appareil mobile (150), et
d) enregistrement (S4) de l'utilisateur sur l'appareil de terrain (100) au moyen de l'information d'enregistrement produite (U2),
**caractérisé en ce qu'**est prévu un dispositif de réception (110) pouvant être couplé avec l'appareil de terrain (100), qui s'enregistre sur l'appareil de terrain (100) en tant qu'appareil d'interface et qui reçoit l'information d'enregistrement (U2) de l'appareil mobile (150) par une liaison de communication (K2) avec l'appareil mobile (150) et enregistre l'utilisateur sur l'appareil de terrain (100) et l'appareil mobile (150), en plus de l'information d'enregistrement (U2) et après l'enregistrement de l'utilisateur sur l'appareil de terrain (100), envoie au dispositif de réception (110) une entrée de gestion pour gérer l'appareil de terrain (100).

2. Procédé selon la revendication 1, **caractérisé en ce que** le dispositif de sécurité (200) est disposé localement près de l'appareil de terrain (100).

3. Procédé selon la revendication 2, **caractérisé en ce que** l'information utilisateur (U1) mise à disposition est transmise au moyen d'une liaison de communication locale (K1) entre l'appareil mobile (150) et le dispositif de sécurité (200).

4. Procédé selon l'une des revendications 1 à 3, **caractérisé en ce que** le dispositif de sécurité (200) pour l'enregistrement sécurisé d'une manière cryptographique de données d'accès est configuré pour au moins un groupe d'utilisateurs d'une pluralité de groupes d'utilisateurs de l'appareil de terrain (100).

5. Procédé selon l'une des revendications 1 à 4, **caractérisé en ce que** l'appareil mobile (150) produit l'information d'enregistrement (U2) au moyen d'un procédé cryptographique en fonction de l'information utilisateur (U1).

6. Procédé selon l'une des revendications 1 à 5, **caractérisé en ce que** l'étape a) comprend une authentification de l'utilisateur sur l'appareil mobile (150) et/ou sur le dispositif de sécurité (200).

7. Système d'automatisation (300) avec un nombre d'appareils de terrain (100) et au moins un dispositif de sécurité (200), dans lequel chaque appareil de terrain (100) du nombre d'appareils de terrain (100) peut être géré par au moins un utilisateur, dans lequel pour gérer l'un des appareils de terrain (100) un enregistrement dans l'appareil de terrain respectif (100) est nécessaire au moyen d'une information d'enregistrement (U2) spécifique à l'appareil de terrain, dans lequel un appareil mobile (150) du au moins un utilisateur est configuré pour demander une information utilisateur (U1) du dispositif de sécurité (200) en fonction d'une identité du au moins un utilisateur et d'une identité de l'appareil de terrain respectif (100), et dans lequel l'appareil mobile (150) est configuré pour produire l'information d'enregistrement spécifique à l'appareil de terrain (U2) en fonction de l'information utilisateur (U1) demandée et pour délivrer l'information d'enregistrement (U2) produite,
**caractérisé en ce que**
- au moins l'un des appareils de terrain (100) du nombre d'appareils de terrain (100) présente un dispositif de réception couplé (110) qui est configuré de sorte qu'il s'enregistre sur l'appareil de terrain (100) en tant qu'appareil d'interface, dans lequel l'appareil mobile (150) est configuré pour établir une liaison de communication (K2) avec le dispositif de réception (110), dans lequel l'appareil mobile (150) est configuré pour transmettre l'information d'enregistrement (U2) au dispositif de réception (110) par la liaison de communication (K2) et le dispositif de réception (110) est configuré pour enregistrer le au moins un utilisateur sur l'appareil de terrain (100), et
- l'appareil mobile (150) est configuré pour produire une entrée de gestion pour gérer l'appareil de terrain (100) et pour transmettre l'entrée de gestion au dispositif de réception (110) après un enregistrement du au moins un utilisateur sur l'appareil de terrain (100).

8. Système d'automatisation (300) selon la revendication 7, **caractérisé en ce que** le nombre d'appareils de terrain (100) forme un groupe local, dans lequel le dispositif de sécurité (200) est disposé localement dans le groupe.

9. Système d'automatisation (300) selon la revendication 8, **caractérisé en ce que** l'appareil mobile (150) est configuré pour demander l'information utilisateur (U1) au moyen d'une liaison de communication locale (K1) avec le dispositif de sécurité (200).

10. Système d'automatisation (300) selon l'une des revendications 7 à 9,
**caractérisé en ce que** l'appareil mobile est configuré pour demander l'information utilisateur (U1) et/ou pour produire l'information d'enregistrement (U2) au moyen d'un procédé cryptographique.

11. Système d'automatisation (300) selon l'une des revendications 7 à 10, **caractérisé en ce que** la liaison de communication (K1) pour demander l'information utilisateur (U1) et/ou la liaison de communication (K2) pour transmettre l'information d'enregistrement (U2) est une liaison de communication locale (K1, K2).
